# EUROPÄISCHE PATENTSCHRIFT

(11) **EP 1 690 630 B1**
(45) Veröffentlichungstag und Bekanntmachung des Hinweises auf die Patenterteilung: **09.05.2007**
(21) Anmeldenummer: 05003065.9
(22) Anmeldetag: 14.02.2005
(51) Int. Cl.: B23K 33/00, B23K 26/24

(54) **Verfahren zum Verbinden von zwei metallischen Werkstücken**
Process for joining two metallic workpieces
Procédé de jonction de deux pièces métalliques

(43) Veröffentlichungstag der Anmeldung: 16.08.2006
(73) Patentinhaber: GKSS-Forschungszentrum Geesthacht GmbH, 21502 Geesthacht (DE)
(72) Erfinder: Kocak, Mustafa, 21502 Geesthacht (DE)
(74) Vertreter: UEXKÜLL & STOLBERG

(56) Entgegenhaltungen:
- DE-A1- 10 229 744
- DE-A1- 10 349 677
- US-B1- 6 270 044

## Beschreibung

Die vorliegende Erfindung betrifft ein Verfahren zum Verschweißen von zwei metallischen Werkstücken gemäss dem Oberbegriff des Anspruchs 1.

Bisher werden im Bereich des Flugzeugbaus zur Verbindung von Rumpfteilen zumeist Nieten eingesetzt. Dies ist jedoch mit dem Nachteil verbunden, dass Nietverbindungen ein vergleichsweise hohes Gewicht aufweisen und außerdem neben den Nieten ein. Dichtmittel erforderlich ist, um die Verbindung ggf. abzudichten. Im Flugzeugbau sind aber Gewichtseinsparungen von besonderer Bedeutung, so dass alternative Verbindungsformen wünschenswert sind.

Speziell beim Verbinden von Blechen der Flugzeugaußenhaut ("Skin"-Elemente) mit Längsprofilen ("Stringern") oder anderen Befestigungselementen ("Clips") bietet sich stattdessen das Schweißen und insbesondere das Laserschweißen als vielversprechenden Verbindungstechnik an. Im Vergleich zu Nietverbindungen sind Schweißverbindungen mit einem geringeren Gewicht verbunden, und es ist außerdem kein zusätzliches Dichtmittel erforderlich.

Beim Schmelzschweißen und insbesondere beim Laserschweißen dünner Bleche tritt jedoch das Problem auf, dass im Bereich des Anfangs- und Endpunktes der Schweißnaht ("run in" und "run out") Poren oder Risse auftreten. Außerdem kommt es beim Laserschweißen im Endbereich der Schweißnaht häufig zur Bildung von Endkratern, die ebenfalls den Ausgangspunkt für Risse bilden können.

Diese Risse und Poren haben ihre Ursache in hohen Spannungen, die dort lokal entstehen, wo beim Ein- oder Ausschalten eines Laserstrahls eine schnelle Verfestigung von geschmolzenem Metall stattfindet. Dieses Problem tritt besonders an den Endbereichen eines Längsprofils (Stringer) oder eines sonstigen Befestigungselements (Clip) auf, die an einem Blech befestigt werden sollen.

Zur Vermeidung von Rissen und Poren schlägt die DE 102 29 744 Al vor, die Leistung des zum Schweißen verwendeten Lasers am Anfang und am Ende der Schweißnaht über eine Rampe zu steuern, so dass nicht sofort mit der vollen Laserleistung begonnen wird, sondern diese mit einer vorgegebenen Rate bis zur vollen Leistung gesteigert wird. In analoger Weise wird am Ende der Schweißnaht vorgegangen, indem dort die Laserleistung heruntergefahren wird.

Aus der DE 103 49 677 A1, die als nächstliegender Stand der Technik gesehen wird, ist zur Vermeidung von Rissen und Poren an den Enden der Schweißnaht bekannt, dort den Fokus des Laserstrahls aus der Oberfläche des Werkstücks herauszubewegen, um so die deponierte Leistung des Laserstrahls auf eine größere Fläche zu verteilen und damit die hervorgerufenen Spannungen zu reduzieren.

Beide aus dem Stand der Technik bekannten Verfahren können die Riss- und Porenbildung jedoch nicht in zufriedenstellendem Maßen verhindern.

Daher liegt der vorliegenden Erfindung ausgehend vom Stand der Technik die Aufgabe zugrunde, ein Verfahren zum Verschweißen von zwei metallischen Werkstücken bereitzustellen, bei dem eine Riss- und Porenbildung im Bereich der Schweißnaht zuverlässig verhindert wird.

Diese Aufgabe wird erfindungsgemäß durch ein Verfahren mit den folgenden Schritten gelöst:
- Bereitstellen eines ersten Werkstücks und eines zweiten Werkstücks, wobei das erste Werkstück ein erstes Ende und eine sich zu dem ersten Ende erstreckende Verbindungsfläche aufweist,
- Bereitstellen eines Abschlussstücks, wobei das Abschlussstück eine Auflagefläche aufweist und wobei die in der Ebene der Auflagefläche gemessene Breite des Abschlussstücks größer als die Breite der Verbindungsfläche im Bereich des ersten Endes ist,
- Anordnen des ersten Werkstücks auf dem zweiten Werkstück, sodass die Verbindungsfläche auf einer Oberfläche des zweiten Werkstücks aufliegt,
- Anordnen des Abschlussstücks in der Weise, dass das Abschlussstück im Bereich des ersten Endes gegen das erste Werkstück stößt und mit der Auflagefläche auf dem zweiten Werkstück aufliegt,
- Bilden einer Schweißverbindung zwischen dem ersten Werkstück und dem zweiten Werkstück sowie zwischen dem Abschlussstück und dem zweiten Werkstück, die um den Rand der aus der Verbindungsfläche und der Auflagefläche gebildeten Gesamtfläche umläuft.

Durch des Anordnen eines Abschlussstückes an dem ersten Ende des Werkstücks und auf der Oberfläche des zweiten Werkstücks, wobei das Abschlussstück eine größere Breite als das erste Werkstück aufweist, kann eine umlaufende Schweißnaht gebildet werden, die einen glatten Verlauf hat ohne Abschnitte mit geringen Krümmungsradien.

Durch das erfindungsgemäße Verfahren wird zudem verhindert, dass der von der Geometrie her kritische Punkt der Schweißnaht am Ende des ersten Werkstücks mit einem "run-in" oder "runout" zusammenfällt, wo der Laserstrahl angesetzt oder gestoppt wird. Dies ist sonst in herkömmlichen Verfahren bei der Verwendung von zwei Laserstrahlen der Fall.

Es wird somit vermieden, dass im Bereich der Schweißnaht Punkte vorhanden sind, an denen bei der schnellen Verfestigung des aufgeschmolzenen Materials hohe Spannungen insbesondere im zweiten Werkstück auftreten, was in der Folge zu einer Rissbildung führen kann.

Ein weiterer Vorteil besteht darin, dass sich das Anordnen des Abschlussstückes leicht in ein automatisiertes Laserschweißverfahren, beispielsweise mit einem Schweißroboter, integrieren lässt.

Insbesondere für den Fall, dass das erste Werkstück eine längliche Form hat und ein dem ersten Ende gegenüberliegendes zweites Ende, wird in einer bevorzugten Ausführungsform des Verfahrens auch am zweiten Ende ein Abschlussstück angeordnet. Auf diese Weise können insbesondere Träger ("Stringer") an dünnen Blechen verschweißt werden, ohne dass die Gefahr der Rissbildung besteht.

Um eine spätere Rissbildung im Bereich des Abschlussstückes zuverlässig zu verhindern, ist es besonders bevorzugt, wenn die Auflagefläche des Abschlussstückes einen runden, insbesondere kreisförmigen Rand hat.

In einer weiteren bevorzugten Ausführungsform des erfindungsgemäßen Verfahrens weist das Abschlussstück eine Aussparung auf, wobei das Abschlussstück dann so angeordnet wird, dass das Ende des ersten Werkstücks in die Aussparung eingreift. Dies ist insbesondere dann von Vorteil, wenn das erfindungsgemäße Verfahren im Rahmen eines automatisierten Schweißverfahrens verwendet wird, weil sich das Abschlussstück dann leicht positionieren lässt, wobei die Anordnung von erstem Werkstück und Abschlussstück relativ zueinander durch die Ausgestaltung der Aussparung vorgegeben werden kann.

Weiterhin ist es bevorzugt, wenn der Querschnitt des Abschlussstückes in der Ebene der Auflagefläche ringförmig ausgebildet ist und das Abschlussstück somit einen Hohlraum aufweist. Dies führt zu einem möglichst geringen Gewicht des Abschlussstücks, was insbesondere im Bereich des Flugzeugbaus von Vorteil ist.

Um zu verhindern, dass sich in dem Hohlraum eines ringförmigen Abschlussstückes Feuchtigkeit ansammeln kann, ist es weiter bevorzugt, dass die Wandung des Abschlussstücks eine Bohrung aufweist.

In einer weiteren bevorzugten Ausführungsform des erfindungsgemäßen Verfahrens wird eine Schweißverbindung zwischen dem/den Abschlussstücken(en) und dem ersten Werkstück gebildet, wodurch die Stabilität der Anordnung aus dem ersten und zweiten Werkstück weiter erhöht wird.

Zum Bilden der Schweißverbindungen wird in weiter bevorzugter Weise ein Laser eingesetzt, was mit dem Vorteil verbunden ist, dass auch Schweißnähte mit einer komplizierten Geometrie ohne Probleme automatisiert gebildet werden können.

Weiterhin ist es bevorzugt, das erfindungsgemäße Verfahren beim Schweißen von Aluminium bzw. Aluminium-Legierungen einzusetzen, weil gerade diese Materialien besonders zur Rissbildung neigen.

Im Folgenden wird die vorliegende Erfindung anhand einer lediglich ein bevorzugtes Ausführungsbeispiel darstellenden Zeichnung erläutert. In der Zeichnung zeigen
- Fig. 1: eine Verbindung zweier Werkstücke in Seitenansicht, die gemäß dem erfindungsgemäßen Verfahren erstellt worden ist,
- Fig. 2: ein Schnitt entlang der Linie II-II in Fig. 1,
- Fig. 3: ein zweites Ausführungsbeispiel eines erfindungsgemäßen Abschlussstückes in Draufsicht und
- Fig. 4: zwei weitere Ausführungsbeispiele erfindungsgemäßer Abschlussstücke in Seitenansicht.

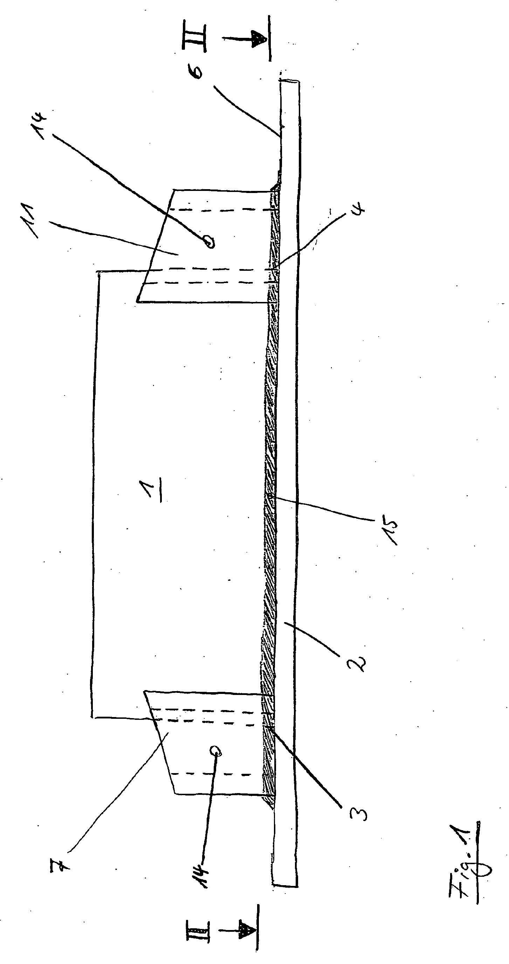

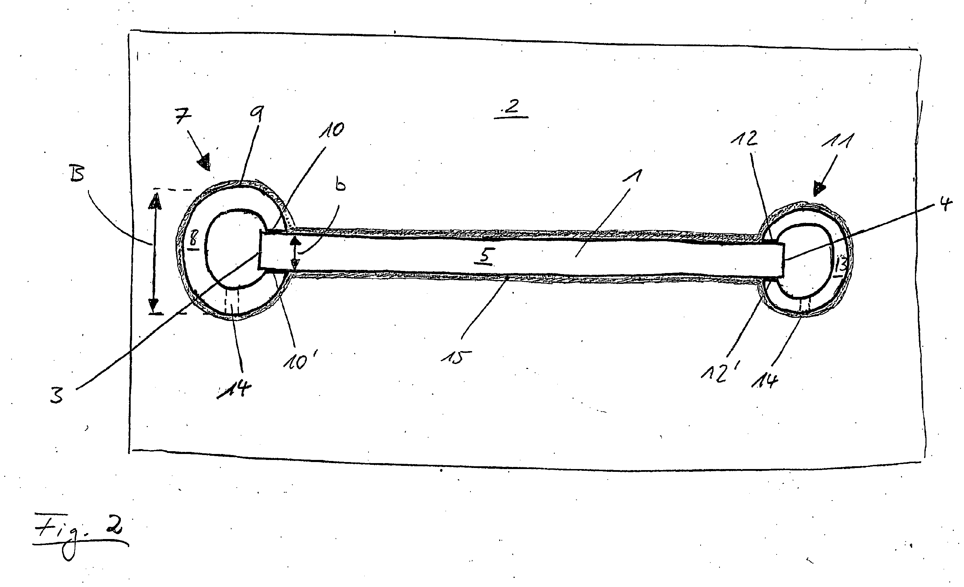

Fig. 1 und 2 zeigen eine Verbindung zwischen einem ersten Werkstück 1 und einem zweiten Werkstück 2, die mit dem Verfahren gemäß der vorliegenden Erfindung hergestellt worden ist. Im insoweit bevorzugten Ausführungsbeispiel ist das Material des ersten Werkstücks 1 und des zweiten Werkstücks 2 Aluminium. Das zweite Werkstück 2 ist als Blech mit einer geringen Dicke ausgebildet, auf dem im Wesentlichen senkrecht stehend das erste Werkstück 1 angeordnet ist. Dabei kann es sich bei dem ersten Werkstück 1 insbesondere um ein Längsprofil ("Stringer") handeln, wie er im Bereich der Außenhaut von Flugzeugen verwendet wird.

Das erste Werkstück 1 weist ein erstes Ende 3 und ein zweites Ende 4 auf; zwischen denen sich eine Verbindungsfläche 5 erstreckt, wobei das erste Werkstück 1 mit der Verbindungsfläche 5 auf einer Oberfläche 6 des zweiten Werkstücks 2 aufliegt.

Am ersten Ende 3 des ersten Werkstücks 1 ist ein erstes Abschlussstück 7 angeordnet, das eine Auflagefläche 8 aufweist, mit der es auf der Oberfläche 6 des zweiten Werkstücks 2 aufliegt. Im insoweit bevorzugten Ausführungsbeispiel weist die Auflagefläche 8 des ersten Abschlussstückes 7 einen kreisförmigen Rand 9 auf. Das erste Abschlussstück 7 ist in der Weise an dem ersten Werkstück 1 angeordnet, dass die Endflächen 10, 10' gegen das erste Ende 3 des ersten Werkstücks 1 stoßen, wobei die Endflächen 10, 10' dabei an dem ersten Werkstück 1 anliegen. Dadurch, dass die Endflächen 10, 10' des ersten Abschlussstücks 7 beabstandet zueinander sind, ist eine Aussparung in dem ersten Abschlussstück 7 vorgesehen, in die das erste Ende 3 des ersten Werkstücks 1 eingreift.

Insgesamt weist das erste Abschlussstück 7 eine Breite B auf, die größer als die Breite b der Verbindungsfläche 5 des ersten Werkstücks 1 im Bereich des ersten Endes 3 ist. Die Breiten b, B werden dabei im Wesentlichen senkrecht zu der Erstreckungsrichtung der Verbindungsfläche 5 zwischen den Enden 3, 4 des ersten Werkstücks 1 gemessen.

Das erste Abschlussstück 7 ist ringförmig ausgebildet und weist einen Hohlraum im Inneren auf. Durch den Hohlraum wird Material eingespart, so dass das erste Abschlussstück 7 gewichtssparend ausgebildet ist.

Am zweiten Ende 4 des ersten Werkstücks 1 ist ein zweites Abschlussstück 11 angeordnet, das in derselben Weise ausgebildet ist, wie das erste Abschlussstück 7. Das zweite Abschlussstück 11 liegt mit seinen Endflächen 12, 12' im Bereich des ersten Endes 4 an dem ersten Werkstück 1 an und stößt somit ebenfalls gegen das erste Werkstück 1. Außerdem liegt das zweite Abschlussstück 11 mit seiner Auflagefläche 13 ebenfalls auf der Oberfläche 6 des zweiten Werkstücks 2 auf.

Sowohl das erste Abschlussstück 7 als auch das zweite Abschlussstück 11 weisen eine Bohrung 14 auf, die in der Wandung angeordnet ist und durch die Feuchtigkeit, die sich im Inneren des Hohlraumes der Abschlussstücke 7, 11 ansammelt, nach außen gelangen kann.

Das erste Werkstück 1, das erste Abschlussstück 7 und das zweite Abschlussstück 11 sind durch eine Schweißverbindung 15 mit dem zweiten Werkstück 2 verbunden. Die Schweißverbindung 15 läuft um das erste Werkstück 1, das erste Abschlussstück 7 und das zweite Abschlussstück 11. Dabei verläuft die Schweißverbindung 15 entlang des nach Außen weisenden Randes einer Gesamtfläche, die sich aus der ersten Auflagefläche 8, der Verbindungsfläche 5 und der zweiten Auflagefläche 13 zusammensetzt.

Dadurch, dass die Breite B der Abschlussstücke 7, 11 größer als die Breite b der Verbindungsfläche 5 im Bereich der Enden 3, 4 ist, und der Rand 9 der Abschlussstücke 7, 11 einen glatten Verlauf hat, weist die Schweißverbindung 15 keine abrupten Richtungswechsel oder Spitzen auf, in deren Bereich beim schnellen Verfestigen des Materials der Werkstücke 1, 2 Spannungen im Material entstehen, die die Ursache für eine spätere Rissbildung sein können. Insbesondere wird durch die Abschlussstücke 7, 11 vermieden, dass an den Enden 3, 4 des ersten Werkstücks 1 sogenannte "run-in"- bzw. "run-out"-Punkte auftreten, an denen beim Laserschweißen der Laser an- bzw. abgeschaltet wird. Vielmehr kann der Laserstrahl kontinuierlich um die aus der Verbindungsfläche 5 sowie den Auflageflächen 8, 13 gebildeten Gesamtfläche geführt werden. Insbesondere kann ein "run-in" von dem Laserstrahl erneut überstrichen werden.

Das erfindungsgemäße Verfahren zum Erstellen der in den Figuren 1 und 2 gezeigten Verbindung zwischen den Werkstücken 1 und 2 läuft wie folgt ab. Zunächst wird das erste Werkstück 1 mit seiner Verbindungsfläche 5 auf der Oberfläche 6 des zweiten Werkstücks 2 angeordnet. Daraufhin werden an den Enden 3, 4 des ersten Werkstücks 1 ein erstes Abschlussstück 7 und ein zweites Abschlussstück 11 angeordnet, wobei die Abschlussstükke 7, 11 eine Breite B aufweisen, die größer als die Breite der Verbindungsfläche im Endbereich 3, 4 ist. Die Abschlussstücke 7, 11 werden in der Weise angeordnet, dass sie im Bereich der Enden 3, 4 gegen das erste Werkstück 1 stoßen und mit der Auflagefläche 8, 13 auf dem zweiten Werkstück 2 aufliegen.

Dadurch, dass die Abschlussstücke 7, 11 die zwischen den Endflächen 10, 10' und 12, 12' ausgebildeten Aussparungen aufweisen, kann das Anordnen der Abschlussstücke 7, 11 in einfacher Weise automatisiert erfolgen, da deren Position relativ zum ersten Werkstück 1 bereits durch die Aussparung bestimmt ist.

Anschließend wird eine Schweißverbindung 15 zwischen dem zweiten Werkstück 2 einerseits und dem ersten Abschlussstück 7, dem ersten Werkstück 1 und dem zweiten Abschlussstück 11 andererseits gebildet, wobei die Schweißverbindung 15 im insoweit bevorzugten Ausführungsbeispiel mittels eines nicht dargestellten Lasers gebildet wird und um den äußeren Rand der aus der Verbindungsfläche 5 und den Auflageflächen 8, 13 gebildeten Gesamtfläche umläuft. Der Laserstrahl kann dabei so geführt werden, dass der Punkt, an dem der Laser eingeschaltet wird ("run-in") erneut überstrichen wird, so dass der Laser einen Bereich der Schweißverbindung 15 mehrfach überstreicht. Hierdurch kann die Gefahr der späteren Rissbildung weiter minimiert werden.

Weiterhin kann auch eine Schweißverbindung zwischen dem ersten Abschlussstück 7 und dem ersten Werkstück 1 gebildet werden sowie zwischen dem ersten Werkstück 1 und dem zweiten Abschlussstück 11 (nicht dargestellt). Durch diese weiteren Schweißverbindungen kann die Stabilität weiter verbessert werden und insbesondere die Biegesteifigkeit des zweiten Werkstücks 2 erhöht werden.

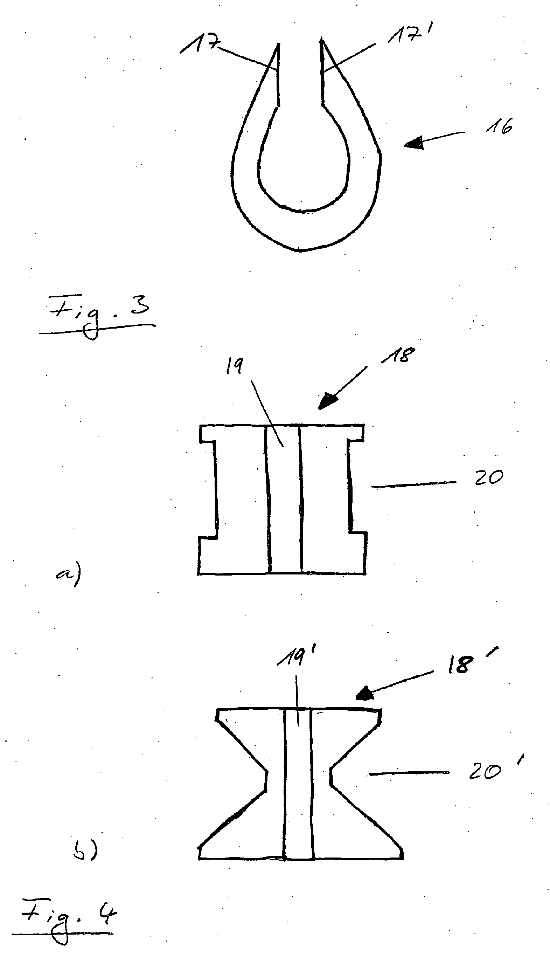

In Fig. 3 ist ein weiteres Ausführungsbeispiel eines erfindungsgemäßen Abschlussstücks 16 gezeigt, das ebenfalls einen ringförmigen Querschnitt aufweist und zwei Endflächen 17, 17' hat, die gegen das erste Werkstück 1 im Bereich des Endes stoßen können. Zwischen den beiden Endflächen 17, 17' ist wiederum eine Aussparung gebildet, in die ein erstes Werkstück eingreifen kann.

Durch den bei diesem Abschlussstück 16 vorgesehenen ovalen Verlauf wird insbesondere im Bereich der Endflächen 17, 17' erreicht, dass der Verlauf der Schweißnaht 15 im Bereich des Überganges zwischen ersten Werkstück 1 und Abschlussstück 16 besonders glatt ist. Hierdurch werden gerade im Übergangsbereich die verbleibenden Spannungen minimiert.

In Fig. 4 sind zwei weitere Ausführungsbeispiele von Abschlussstücken 18, 18' gezeigt. Die Abschlussstücke 18, 18' haben einen kreisförmigen Querschnitt, der bei beiden Abschlussstücken 18, 18' nur von einer Aussparung 19, 19' unterbrochen ist, und weisen jeweils in ihrer Erstreckungsrichtung einen Ansatz 19 bzw. 19' auf, der in der Umfangsfläche des Abschlussstückes 18, 18' vorgesehen ist. Im Bereich der Ansätze 19, 19' ist der Durchmesser der Abschlussstücke 18, 18' reduziert. Im Fall des Abschlussstückes 18 ist der Ansatz 19 rechtreckig ausgebildet, während im Fall des Abschlussstückes 18' der Ansatz 19' keilförmig ausgebildet ist. Durch die Ansätze 19, 19' wird in beiden Fällen ermöglicht, dass das Abschlussstück 18, 18' in einfacher Weise von einem Roboterarm erfasst und an der gewünschten Position an dem ersten Werkstück 1 angeordnet werden kann. Dies erleichtert die automatisierte Durchführung des erfindungsgemäßen Verfahrens mittels eines Schweißroboters.

Durch das erfindungsgemäße Verfahren kann eine Schweißverbindung insbesondere durch Laserschweißen zwischen zwei Werkstükken 1, 2 gebildet werden, die auf Grund der bei der Durchführung des Verfahrens angeordneten Abschlussstücke 7, 11 einen kontinuierlichen Verlauf aufweist. Dadurch können "run-in"- und "run-out"-Punkte zumindest an einen Ort im Verlauf der Schweißnaht gelegt werden, der unempfindlich für eine Rissbildung sind. Somit wird durch das erfindungsgemäße Verfahren die Gefahr der Rissbildung bei der Verbindung zweier Werkstücke 1, 2 erheblich reduziert.

## Patentansprüche

1. Verfahren zum Verschweißen von zwei metallischen Werkstükken (1, 2) umfassend den folgenden Schritt:
- Bereitstellen eines ersten Werkstücks (1) und eines zweiten Werkstücks (2), wobei das erste Werkstück (1) ein erstes Ende (3) und eine sich zu dem ersten Ende (3) erstreckende Verbindungsfläche (5) aufweist, **dadurch gekennzeichnet, dass** es außerdem die folgenden Schritte umfasst:
- Bereitstellen eines Abschlussstücks (7, 11, 16, 18, 18'), wobei das Abschlussstück (7, 11, 16, 18, 18') eine Auflagefläche (8) aufweist und wobei die in der Ebene der Auflagefläche (8) gemessene Breite (B) des Abschlussstücks (7, 11, 16, 18, 18') größer als die Breite (b) der Verbindungsfläche (5) im Bereich des ersten Endes (3) ist,
- Anordnen des ersten Werkstücks (1) auf dem zweiten Werkstück (2), sodass die Verbindungsfläche (5) auf einer Oberfläche (6) des zweiten Werkstücks (2) aufliegt,
- Anordnen des Abschlussstücks (7, 11, 16, 18, 18') in der Weise, dass das Abschlussstück (7, 11, 16, 18, 18') im Bereich des ersten Endes (3) gegen das erste Werkstück (1) stößt und mit der Auflagefläche (8) auf dem zweiten Werkstück (2) aufliegt,
- Bilden einer Schweißverbindung (15) zwischen dem ersten Werkstück (1) und dem zweiten Werkstück (2) sowie zwischen dem Abschlussstück (7, 11, 16, 18, 18') und dem zweiten Werkstück (2), die um den Rand der aus der Verbindungsfläche und der Auflagefläche (8) gebildeten Gesamtfläche umläuft.

2. Verfahren nach Anspruch 1, wobei das erste Werkstück (1) ein zweites Ende (4) aufweist, wobei sich die Verbindungsfläche (5) zwischen dem ersten Ende (3) und dem zweiten Ende (4) erstreckt, wobei ein zweites Abschlussstück (11) bereitgestellt wird, wobei das zweite Abschlussstück (11) in der Weise an dem zweiten Ende (4) des ersten Werkstücks (1) angeordnet wird, dass das zweite Abschlussstück (11) im Bereich des zweiten Endes (4) gegen das erste Werkstück (1) stößt und wobei eine Schweißverbindung (15) zwischen dem ersten Werkstück (1) und dem zweiten Werkstück (2), zwischen dem ersten Abschlussstück (7) und dem zweiten Werkstück (2) sowie zwischen dem zweiten Abschlussstück (11) und dem zweiten Werkstück (2) gebildet wird, die um den Rand der aus der Verbindungsfläche und den Auflageflächen (8, 13) gebildeten Gesamtfläche umläuft.

3. Verfahren nach Anspruch 1 oder 2, wobei die Auflagefläche (8, 13) einen runden, insbesondere kreisförmigen Rand (9) hat.

4. Verfahren nach einem der Ansprüche 1 bis 3, wobei das Abschlussstück (7, 11, 16, 18, 18') eine Aussparung (19) aufweist und wobei das Abschlussstück (7, 11, 16, 18, 18') so angeordnet wird, dass das Ende (3, 4) des ersten Werkstücks (1) in die Aussparung eingreift.

5. Verfahren nach einem der Ansprüche 1 bis 4, wobei der Querschnitt des Abschlussstücks (7, 11, 16, 18, 18') in der Ebene der Auflagefläche (8, 13) ringförmig ausgebildet ist.

6. Verfahren nach Anspruch 5, wobei die Wandung des Abschlussstücks (7, 11, 16, 18, 18') eine Bohrung (14) aufweist.

7. Verfahren nach einem der Ansprüche 1 bis 6, wobei eine Schweißverbindung (15) zwischen dem Abschlussstück (7, 11, 16, 18, 18') und dem ersten Werkstück (1) gebildet wird.

8. Verfahren nach einem der Ansprüche 1 bis 7, wobei die Schweißverbindungen (15) durch Laserschweißen gebildet werden.

9. Verfahren nach einem der Ansprüche 1 bis 8, wobei das erste Werkstück (1), das zweite Werkstück (2) und das Abschlussstück (7, 11, 16, 18, 18') aus Aluminium oder einer Aluminium-Legierung sind.

## Claims

1. Method for welding two metallic workpieces (1, 2), comprising the following step:
- providing a first workpiece (1) and a second workpiece (2), the first workpiece (1) having a first end (3) and a joining surface (5) extending in relation to the first end (3),
**characterized in that** it additionally comprises the following steps:
- providing a terminating piece (7, 11, 16, 18, 18'), the terminating piece (7, 11, 16, 18, 18') having a contact surface (8) and the width (B) of the terminating piece (7, 11, 16, 18, 18'), measured in the plane of the contact surface (8), being greater than the width (b) of the joining surface (5) in the region of the first end (3),
- arranging the first workpiece (1) on the second workpiece (2), so that the joining surface (5) rests on a surface (6) of the second workpiece (2),
- arranging the terminating piece (7, 11, 16, 18, 18') in such a way that the terminating piece (7, 11, 16, 18, 18') butts against the first workpiece (1) in the region of the first end (3) and rests with the contact surface (8) on the second workpiece (2),
- forming a welded joint (15) between the first workpiece (1) and the second workpiece (2) and between the terminating piece (7, 11, 16, 18, 18') and the second workpiece (2), the welded joint running around the edge of the entire surface formed by the joining surface and the contact surface (8).

2. Method according to Claim 1, the first workpiece (1) having a second end (4), the joining surface (5) extending between the first end (3) and the second end (4), a second terminating piece (11) being provided, the second terminating piece (11) being arranged on the second end (4) of the first workpiece (1) in such a way that the second terminating piece (11) butts against the first workpiece (1) in the region of the second end (4), and a welded joint (15) being formed between the first workpiece (1) and the second workpiece (2), between the first terminating piece (7) and the second workpiece (2) and between the second terminating piece (11) and the second workpiece (2), the welded joint running around the edge of the entire surface formed by the joining surface and the contact surfaces (8, 13).

3. Method according to Claim 1 or 2, the contact surface (8, 13) having a round, in particular circular, edge (9).

4. Method according to one of Claims 1 to 3, the terminating piece (7, 11, 16, 18, 18') having a cut-out (19) and the terminating piece (7, 11, 16, 18, 18') being arranged in such a way that the end (3, 4) of the first workpiece (1) engages in the cut-out.

5. Method according to one of Claims 1 to 4, the cross section of the terminating piece (7, 11, 16, 18, 18') being annular in the plane of the contact surface (8, 13).

6. Method according to Claim 5, the wall of the terminating piece (7, 11, 16, 18, 18') having a hole (14).

7. Method according to one of Claims 1 to 6, a welded joint (15) being formed between the terminating piece (7, 11, 16, 18, 18') and the first workpiece (1).

8. Method according to one of Claims 1 to 7, the welded joints (15) being formed by laser welding.

9. Method according to one of Claims 1 to 8, the first workpiece (1), the second workpiece (2) and the terminating piece (7, 11, 16, 18, 18') being made of aluminium or an aluminium alloy.

## Revendications

1. Procédé pour le soudage de deux pièces métalliques (1, 2), comprenant l'étape suivante:
- mise en place d'une première pièce (1) et d'une deuxième pièce (2), la première pièce (1) comportant une première extrémité (3) et une surface de liaison (5) s'étendant vers la première extrémité (3), **caractérisé en ce qu'**il comprend en outre les étapes suivantes:
- mise en place d'une pièce de terminaison (7, 11, 16, 18, 18'), la pièce de terminaison (7, 11, 16, 18, 18') comportant une surface d'appui (8) et la largeur (B) mesurée dans le plan de la surface d'appui (8) de la pièce de terminaison (7, 11, 16, 18, 18') étant supérieure à la largeur (b) de la surface de liaison (5) dans la zone de la première extrémité (3),
- disposition de la première pièce (1) sur la deuxième pièce (2) de telle manière que la surface de liaison (5) repose sur une surface (6) de la deuxième pièce (2),
- disposition de la pièce de terminaison (7, 11, 16, 18, 18') de telle manière que la pièce de terminaison (7, 11, 16, 18, 18') entre en contact avec la première pièce (1) dans la zone de la première extrémité (3) et que sa surface d'appui (8) repose sur la deuxième pièce (2),
- formation d'un joint soudé (15) qui entoure le bord de l'ensemble de la surface formée par la surface de liaison et la surface d'appui (8) entre la première pièce (1) et la deuxième pièce (2), ainsi qu'entre la pièce de terminaison (7, 11, 16, 18, 18') et la deuxième pièce (2).

2. Procédé selon la revendication 1, la première pièce (1) comportant une deuxième extrémité (4), la surface de liaison (5) s'étendant entre la première extrémité (3) et la deuxième extrémité (4), une deuxième pièce de terminaison (11) étant mise en place, la deuxième pièce de terminaison (11) étant disposée sur la deuxième extrémité (4) de la première pièce (1) de telle manière que la deuxième pièce de terminaison (11) entre en contact avec la première pièce (1) dans la zone de la deuxième extrémité (4) et un joint soudé (15) qui entoure le bord de l'ensemble de la surface formée par la surface de liaison et les surfaces d'appui (8, 13) étant formé entre la première pièce (1) et la deuxième pièce (2), entre la première pièce de terminaison (7) et la deuxième pièce (2) ainsi qu'entre la deuxième pièce de terminaison (11) et la deuxième pièce (2).

3. Procédé selon la revendication 1 ou 2, la surface d'appui (8, 13) ayant un bord rond, en particulier en forme de cercle (9).

4. Procédé selon une des revendications 1 à 3, la pièce de terminaison (7, 11, 16, 18, 18') comportant un évidement (19) et la pièce de terminaison (7, 11, 16, 18, 18') étant disposée de telle manière que l'extrémité (3, 4) de la première pièce (1) s'engage dans l'évidement.

5. Procédé selon une des revendications 1 à 4, la section transversale de la pièce de terminaison (7, 11, 16, 18, 18') étant réalisée en forme d'anneau dans le plan de la surface d'appui (8, 13).

6. Procédé selon la revendication 5, la paroi de la pièce de terminaison (7, 11, 16, 18, 18') comportant un trou (14).

7. Procédé selon une des revendications 1 à 6, un joint soudé (15) étant formé entre la pièce de terminaison (7, 11, 16, 18, 18') et la première pièce (1).

8. Procédé selon une des revendications 1 à 7, les joints soudés (15) étant formés par soudage au laser.

9. Procédé selon une des revendications 1 à 8, la première pièce (1), la deuxième pièce (2) et la pièce de terminaison (7, 11, 16, 18, 18') étant en aluminium ou dans un alliage d'aluminium.
